# EUROPEAN PATENT APPLICATION

(11) **EP 4 412 066 A1**
(43) Date of publication of application: **07.08.2024**
(21) Application number: 24152938.7
(22) Date of filing: 19.01.2024
(51) Int. Cl.: H02M 1/00, H02M 1/42, H02M 3/00, H02M 3/28, H02M 3/335, H02M 7/483

(54) **MULTI-PHASE AC-DC CONVERTER**

(30) Priority: 02.02.2023 US 202318163393
(71) Applicant: Delta Electronics, Inc., Neihu, Taipei 11491 (TW)
(72) Inventor: Zhang, Chi, Durham, NC 27709 (US); Wang, Ruxi, Durham, NC 27709 (US); Shen, Zhiyu, Durham, NC 27709 (US); Barbosa, Peter Mantovanelli, Durham, NC 27709 (US); Li, Sheng-Hua, Durham, NC 27709 (US)
(74) Representative: Uexküll & Stolberg

(57) **Abstract**

A three-phase AC-DC converter (800) is provided that can offer a low total harmonic distortion (THD) of input current and good power factor with the capability of soft-switching of the active switches (S₁, S₂). In one aspect, a phase shift (PS) is introduced to the gate signal of one of the primary side active switches (S₂) of the three-phase AC-DC converter (800) and the gate signal of a corresponding one of the secondary side active switches (S_{O1}) of the three-phase AC-DC converter (800).

## Description

### FIELD OF THE INVENTION

The present disclosure relates to a multi-phase AC-DC converter. More particularly, the present disclosure relates to a three-phase AC-DC converter with power-factor correction (PFC).

### BACKGROUND OF THE INVENTION

Generally, a front-end power-factor-correction (PFC) rectifier is required in three-phase AC-DC applications. The PFC rectifier usually provides low total harmonic distortion (THD) of the input three-phase current and a high power factor.

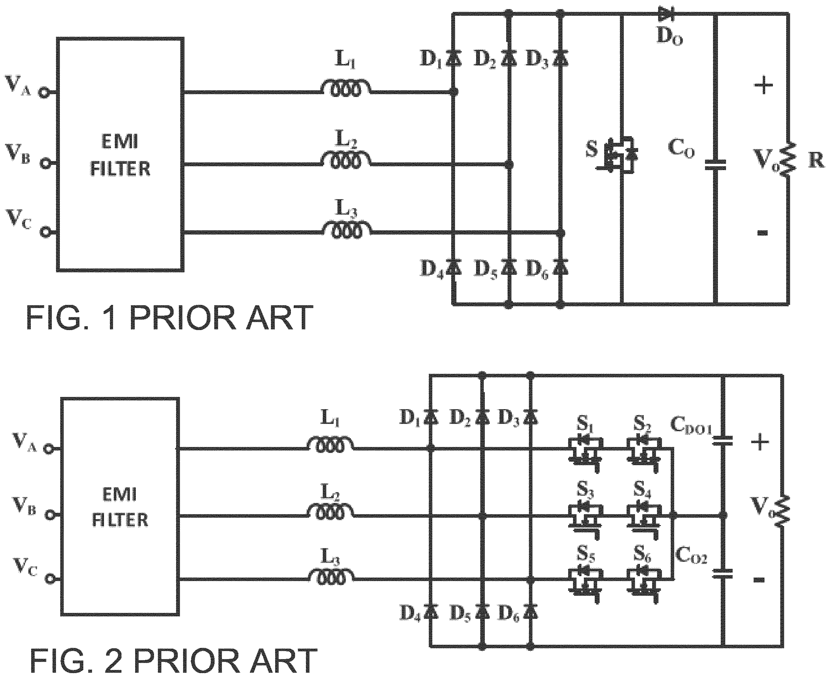

FIG. 1 illustrates a conventional three-phase rectifier with only one switch. This three-phase rectifier performs PFC and achieves low THD by operating the boost inductors in the discontinuous conduction mode (DCM), where the boost inductors are completely discharged in every switching cycle. In the DCM operation, the line current naturally follows the line voltage resulting in improved THD and power factor (PF). Because the inductor current is not controlled directly, usually low-bandwidth constant switching frequency control is implemented. As reported in related literature, the three-phase rectifier is capable of achieving 10% to 20% THD, which is acceptable in some applications.

To further minimize the current distortion in high-power applications, the Vienna rectifier illustrated in FIG. 2 is proposed in Ref. [1]. Vienna rectifier offers high-efficiency AC-DC conversion, low THD of input current, and a high power factor, but the Vienna rectifier includes too many components and is thus not attractive in low-cost applications.

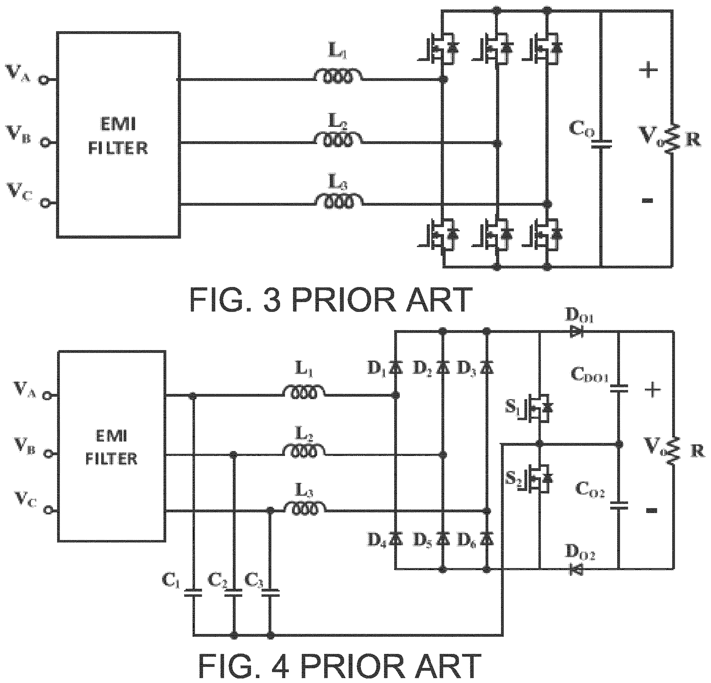

FIG. 3 illustrates a six-switch boost converter with the capability for bidirectional power flow. By using wide-band-gap devices, e.g., SiC devices, it can provide both high efficiency and high power density as reported in Ref. [2]. The high cost of wide-band-gap devices is a potential obstacle for this converter to be widely accepted.

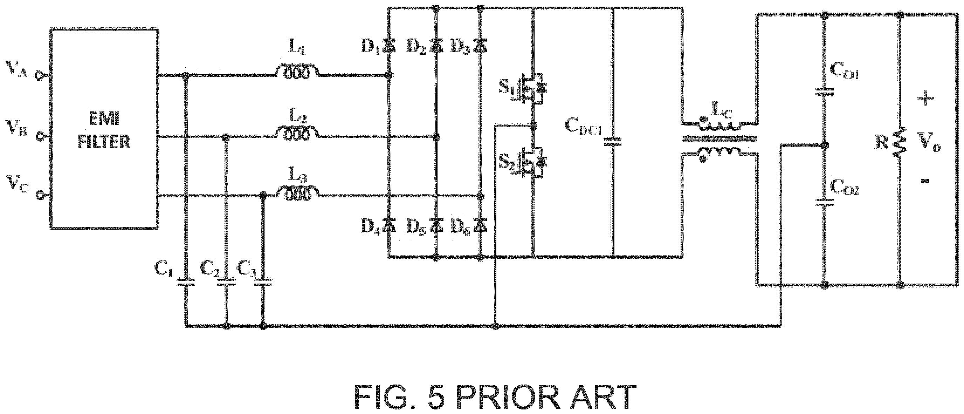

FIG. 4 illustrates a two-switch three-phase rectifier proposed in Ref. [3]. By connecting the capacitors C1, C2, and C3 in the "Y" connection, a virtual neutral point is obtained. The virtual neutral point is further connected to the midpoint of the two switches and the midpoint of the output capacitors, CO1 and CO2. This connection partially decouples the phase currents for most of the line period by making the three-phase PFC rectifier operate as three independent single-phase PFC rectifiers. This structure is further improved as illustrated in FIG. 5, which is proposed in Ref. [4]. The rectifier in FIG. 5 provides better electromagnetic interference (EMI) performance by adding an inductively decoupling stage, which makes it suitable in fast high-voltage change applications.

Recently, high input voltage three-phase power supplies are more and more attractive in high power applications, e.g., solid-stage-transformer, because they can deliver more power for the same amount of input current. To operate the converters in FIGs. 1 through 5 in high input voltage conditions, one possible approach is to directly replace the low voltage devices with ultra-high voltage devices as reported in Ref. [5]. However, ultra-high voltage devices are currently not available in the market and will be very costly in near future. Another possible approach is to cascade the front-end bridges to block the high input voltage as reported in Ref. [6]. This approach usually requires a substantial amount of active switches for the front-end PFC and also needs multiple DC-DC converters to provide galvanic isolation, which further increases the number of switches for the system.

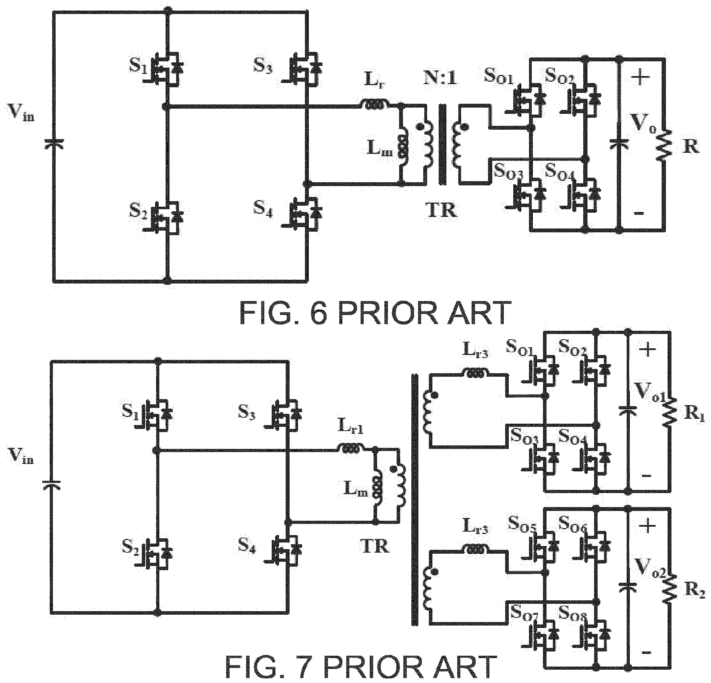

Many power conversion applications (e.g., battery charging in electrical vehicles (EVs)) require a regulated output voltage over a wide voltage range. For example, a typical EV battery charger circuit has a voltage range between 240 volts to 460 volts. Thus, a converter that can provide both PFC and a regulated output voltage over a very wide output voltage range is desired to accommodate the charging requirements at different battery voltage levels. An overview of Dual-Active-Bridge (DAB) Isolated Bidirectional DC-DC Converters as illustrated in FIG. 6 is discussed in Ref. [7], where DAB is used in DC-DC conversion for a wide voltage gain range. Ref. [8] further improved the conventional DAB to feature multi-port functions, such as the triple-active-bridge (TAB) DC-DC isolated converter as illustrated in FIG. 7. However, a separated AC-DC converter is required before the DAB stage to provide PFC function. A simpler structure is desired.

### References:

Ref. [1]: J. W. Kolar and F.C. Zach, "A novel three-phase utility interface minimizing line current harmonics of high-power telecommunications rectifier modules," IEEE Transactions on Industrial Electronics, vol. 44, no. 4, pp. 456-467, Aug. 1997.
Ref. [2]: J.W. Kolar and T. Friedli, "The essence of three-phase PFC rectifier systems," IEEE Trans. Power Electron., vol. 28, no. 1, pp. 176-198, Jan. 2013.
Ref. [3]: Jianping Ying et al., "Integrated Converter Having Three-Phase Power Factor Correction," U.S. Pat. No. 7,005,759, issued February 28, 2006.
Ref. [4]: Yungtaek Jang et al., "Three-Phase Soft-Switched PFC Rectifiers," U.S. Pat. No. 8,687,388, issued April 1, 2014.
Ref. [5]: Madhusoodhanan et al., "Solid-State Transformer and MV Grid Tie Applications Enabled by 15 kV SiC IGBTs and 10 kV SiC MOSFETs Based Multilevel Converters," IEEE Transactions on Industry Applications, vol. 51, no. 4, pp. 3343-3360, July-Aug. 2015.
Ref. [6]: X. She, A.Q. Huang and R. Burgos, "Review of Solid-State Transformer Technologies and Their Application in Power Distribution Systems," IEEE Journal of Emerging and Selected Topics in Power Electronics, vol. 1, no. 3, pp. 186-198, Sept. 2013.
Ref. [7]: B. Zhao, Q. Song, W. Liu, and Y Sun, "Overview of Dual-Active-Bridge Isolated Bidirectional DC-DC Converter for High-Frequency-Link Power-Conversion System," in IEEE Transactions on Power Electronics, vol. 29, no. 8, pp. 4091-4106, Aug. 2014.
Ref. [8]: C. Zhao, S. D. Round and J. W. Kolar, "An Isolated Three-Port Bidirectional DC-DC Converter With Decoupled Power Flow Management," in IEEE Transactions on Power Electronics, vol. 23, no. 5, pp. 2443-2453, Sept. 2008.

### SUMMARY OF THE INVENTION

In one aspect, the present disclosure provides an AC/DC converter comprising: a plurality of internal terminals including a positive terminal, a negative terminal, and a neutral terminal; an input stage electrically coupled to the positive, negative, and neutral terminals and including at least three input terminals that are connectable to a three-phase AC power source; a switching converter stage including a plurality of primary side switches electrically coupled between the positive and negative terminals; an output stage electrically coupled to the switching converter stage and the neutral terminal, the output stage including output terminals that are connectable to a load, thereby providing a DC voltage to the load, wherein the output stage comprises a transformer and an active bridge including a plurality of secondary side switches; and a controller electrically coupled to the switching converter stage and the output stage to generate gate signals for the plurality of primary side switches and the plurality of secondary side switches, wherein a phase shift is introduced between the gate signal of one of the plurality of primary side switches and the gate signal of a corresponding one of the plurality of secondary side switches.

In one embodiment, the plurality of primary side switches of the switching converter stage comprises two active switches and wherein a midpoint of the two active switches is electrically coupled to the neutral terminal.

In one embodiment, the input stage comprises a three-phase diode bridge.

In one embodiment, the AC/DC converter further comprises a plurality of boost inductors, each being electrically coupled between a corresponding input terminal of the three-phase AC power source through an EMI filter and a corresponding leg of the three-phase diode bridge.

In one embodiment, the AC/DC converter further comprises a plurality of capacitors, each being connected between a corresponding input terminal of the three-phase AC power source through an EMI filter and the neutral terminal.

In one embodiment, the switching converter stage further comprises a plurality of DC-link capacitors connected in series and coupled to the input stage in parallel.

In one embodiment, a midpoint of the plurality of DC-link capacitors is electrically coupled to one primary side terminal of the transformer, while a midpoint of the plurality of primary side switches is electrically coupled to another primary side terminal of the transformer.

In one embodiment, the output stage comprises: a first transformer and a first active bridge connected to a secondary side of the first transformer, and a second transformer and a second active bridge connected to a secondary side of the second transformer. A first primary side terminal of the first transformer is connected to a midpoint of the plurality of DC-link capacitors. A second primary side terminal of the first transformer is connected to a first primary side terminal of the second transformer. A second primary side terminal of the second transformer is connected to the neutral terminal.

In one embodiment, the primary and secondary side switches are metal-oxide-semiconductor field-effect transistors (MOSFETs) or insulated gate bipolar transistors (IGBTs) with antiparallel diodes.

In one embodiment, the AC/DC converter further comprises a blocking capacitor electrically coupled between one of secondary side terminals of the transformer and a midpoint of the active bridge.

In one embodiment, the active bridge comprises a full active bridge including four active switches or a half bridge including two active switches.

In one embodiment, the switching converter stage comprises first, second, third, and fourth active switches electrically coupled in series and a flying capacitor electrically coupled between a midpoint between the first and second active switches and a midpoint between the third and fourth active switches. A midpoint of the second and third active switches is electrically coupled to the neutral terminal.

In one embodiment, the switching converter stage comprises an active full-bridge circuit including first and second active switches electrically coupled in series between the positive and negative terminals, and third and fourth active switches electrically coupled in series between the positive and negative terminals. A midpoint between the first and second active switches is electrically coupled to the neutral terminal, and a midpoint between the third and fourth active switches is electrically coupled to one primary side terminal of the transformer.

In one embodiment, the AC/DC converter further comprises a DC-link capacitor electrically coupled to the input stage in parallel.

In one embodiment, the AC/DC converter further comprises a blocking capacitor electrically coupled between said midpoint between the third and fourth active switches and said one primary side terminal of the transformer.

In one embodiment, the output stage comprises two transformers connected in series on a primary side of said two transformers and connected in parallel on a secondary side of said two transformers.

In one aspect, the present disclosure provides an interleaved or paralleled AC/DC converter comprising two of the AC/DC converters. In a directly parallel operation, the gate signals for a first one of the AC/DC converters are the same as the gate signals for a second one of the AC/DC converters. In an interleaved operation, the gate signals in the first one of the AC/DC converters are interleaved 180 degrees relative to the gate signals in the second one of the AC/DC converters.

In one aspect, the present disclosure provides an AC/DC converter comprising: a plurality of internal terminals including a positive terminal, a negative terminal, and a neutral terminal; an input stage electrically coupled to the positive, negative, and neutral terminals and including at least three input terminals that are connectable to a three-phase AC power source; a switching converter stage including a plurality of half-bridge modules, each half-bridge module including a capacitor and first and second active switches serially connected to form a loop, wherein a first one of the plurality of half-bridge modules is electrically coupled to the positive terminal, a second one of the plurality of half-bridge modules is electrically coupled to the negative terminal, and at least two of the plurality of half-bridge modules are electrically coupled to the neutral terminal; an output stage electrically coupled to the switching converter stage and the neutral terminal, the output stage including output terminals that are connectable to a load, thereby providing a DC voltage to the load, wherein the output stage comprises a transformer and an active bridge including a plurality of secondary side switches; and a controller coupled to the switching converter stage and the output stage to generate gate signals for the first and second active switches of the plurality of half-bridge modules and the plurality of secondary side switches, wherein a phase shift is introduced between the gate signal of one of the first and second active switches of the plurality of half-bridge modules and the gate signal of a corresponding one of the plurality of secondary side switches.

In one embodiment, the switching converter stage further comprises a plurality of DC-link capacitors connected in series and coupled to the input stage in parallel.

In one embodiment, a midpoint of the plurality of DC-link capacitors is electrically coupled to one primary side terminal of the transformer.

In one embodiment, the input stage comprises a three-phase diode bridge.

In one embodiment, the plurality of half-bridge modules of the switching converter stage comprises first and second half-bridge modules, wherein a midpoint of the first and second active switches of the first half-bridge module is connected the positive terminal. A connection point between the capacitor and the second active switch of the first half-bridge module is connected to a midpoint of the first and second active switches of the second half-bridge module and the neutral terminal. A connection point between the capacitor and the second active switch of the second half-bridge module is connected to the negative terminal.

In one embodiment, the plurality of half-bridge modules of the switching converter stage comprises a total of 2n half-bridge modules, and n is a positive integer. A middle point between the first and second active switches of each one of the 2n half-bridge modules is connected to a bottom terminal between the capacitor and the second active switch of a previous one of the 2n half-bridge module, except that the middle point between the first and second active switches of a first one of the 2n half-bridge modules is connected to the positive terminal and that the bottom terminal between the capacitor and the second active switch of a last one of the 2n half-bridge modules is connected to the negative terminal. The neutral terminal is connected to a midpoint between upper n half-bridge modules and lower n half-bridge modules of the 2n half-bridge modules.

In one embodiment, the input stage comprises a total of 6m diodes, the plurality of half-bridge modules of the switching converter stage comprises two sets of 2n half-bridge modules, and m and n are positive integers. A first set of the 2n half-bridge modules is cascaded between the positive and negative terminals with the neutral terminal being electrically coupled to a midpoint between upper n half-bridge modules and lower n half-bridge modules of the first set of the 2n half-bridge modules. A second set of the 2n half-bridge modules is cascaded between the positive and negative terminals with one primary side terminal of the transformer being connected to a midpoint between upper n half-bridge modules and lower n half-bridge modules of the second set of the 2n half-bridge modules.

In one embodiment, the switching converter stage comprises first, second, third, and fourth half-bridge modules cascaded between the positive and negative terminals and a flying capacitor, wherein a first terminal of the flying capacitor is connected to a bottom terminal between the capacitor and the second active switch of the first half-bridge module, and a second terminal of the flying capacitor is connected to a bottom terminal between the capacitor and the second active switch of the third half-bridge module.

In one embodiment, the input stage comprises a total of 6m diodes, the switching converter stage comprises a total of 4n half-bridge modules cascaded between the positive and negative terminals and a flying capacitor, and m and n are positive integers, wherein the neutral terminal is electrically coupled to a midpoint between upper 2n half-bridge modules and lower 2n half-bridge modules of the 4n half-bridge modules, and wherein the flying capacitor is connected between a first midpoint between upper n half-bridge modules and lower n half-bridge modules of said upper 2n half-bridge modules and a second midpoint between upper n half-bridge modules and lower n half-bridge modules of said lower 2n half-bridge modules.

In one embodiment, the output stage comprises a first transformer and a second transformer, wherein a primary side of the first transformer is connected in parallel with a primary side of the second transformer, and wherein each of the first and second transformers is independently connected to a full active bridge on a secondary side.

In one embodiment, the output stage comprises a total of N transformers, primary sides of the N transformers are connected in parallel with each other, and wherein a secondary side of each of the N transformers is independently connected to a full active bridge.

In one embodiment, the switching converter stage comprises a total of 4n half-bridge modules cascaded between the positive and negative terminals and a flying capacitor, and n is a positive integer, wherein the neutral terminal is electrically coupled to a midpoint between upper 2n half-bridge modules and lower 2n half-bridge modules of the 4n half-bridge modules, wherein the flying capacitor is connected between a first midpoint between upper n half-bridge modules and lower n half-bridge modules of said upper 2n half-bridge modules and a second midpoint between upper n half-bridge modules and lower n half-bridge modules of said lower 2n half-bridge modules, wherein the output stage comprises a total of N transformers, primary sides of the N transformers are connected in parallel with each other, and a secondary side of each of the N transformers is independently connected to a full active bridge.

### BRIEF DESCRIPTION OF THE DRAWINGS

The present disclosure is better understood upon consideration of the following detailed description and the accompanying figures.
FIG. 1 illustrates a conventional three-phase single-switch PFC DCM boost rectifier circuit.
FIG. 2 illustrates a conventional three-phase Vienna PFC rectifier circuit.
FIG. 3 illustrates a conventional three-phase six-switch PFC boost rectifier circuit.
FIG. 4 illustrates a conventional three-phase two-switch PFC DCM boost rectifier circuit with virtual neutral and with split output capacitors.
FIG. 5 illustrates a conventional three-phase two-switch zero voltage switching (ZVS) PFC DCM boost rectifier circuit.
FIG. 6 illustrates a conventional dual-active-bridge (DAB) DC-DC isolated converter.
FIG. 7 illustrates a conventional triple-active-bridge (TAB) DC-DC isolated converter with two isolated outputs.
FIG. 8A illustrates an isolated three-phase ZVS PFC DCM AC-DC converter according to an embodiment of the present disclosure.
FIG. 8B illustrates the AC-DC converter of FIG. 8A coupled with a controller, according to an embodiment of the present disclosure.
FIG. 8C illustrates key waveforms for the AC-DC converter of FIG. 8A during a switching cycle according to an embodiment of the present disclosure.
FIG. 9 illustrates an isolated three-phase ZVS PFC DCM AC-DC converter with a blocking capacitor at the secondary side according to an embodiment of the present disclosure.
FIG. 10 illustrates an isolated three-phase ZVS PFC DCM AC-DC converter with an active half-bridge circuit at the secondary side of the transformer according to an embodiment of the present disclosure.
FIG. 11A illustrates an isolated three-phase three-level flying capacitor ZVS PFC DCM AC-DC converter according to an embodiment of the present disclosure.
FIG. 11B illustrates key waveforms of the AC-DC converter in FIG. 11A during a switching cycle according to an embodiment of the present disclosure.
FIG. 12 illustrates an isolated three-phase ZVS PFC DCM AC-DC converter with an active full-bridge circuit on the primary side according to an embodiment of the present disclosure.
FIG. 13A illustrates an isolated three-phase ZVS PFC DCM AC-DC converter with an active full-bridge circuit and a blocking capacitor on the primary side according to an embodiment of the present disclosure.
FIG. 13B illustrates key waveforms of the AC-DC converter in FIG. 13A during a switching cycle according to an embodiment of the present disclosure.
FIG. 14 illustrates interleaved or paralleled isolated three-phase ZVS PFC DCM AC-DC converters according to an embodiment of the present disclosure.
FIG. 15 illustrates an isolated three-phase ZVS PFC DCM AC-DC converter with two transformers connected in series on the primary side and two separated outputs according to an embodiment of the present disclosure.
FIG. 16 illustrates an isolated three-phase ZVS PFC DCM AC-DC converter with two transformers connected in series on the primary side and connected in parallel on the secondary side according to an embodiment of the present disclosure.
FIG. 17A illustrates an isolated three-phase ZVS PFC DCM AC-DC converter with two half-bridge modules according to an embodiment of the present disclosure.
FIG. 17B illustrates an enlarged view of the half-bridge modules of the AC-DC converter in FIG. 17A.
FIG. 18A illustrates a generalized isolated three-phase ZVS PFC DCMAC-DC converter based on a total of 6m (m = 1, 2, 3, ... ) diodes and 2n (n = 1, 2, 3, ... ) half-bridge modules according to an embodiment of the present disclosure.
FIG. 18B illustrates the key waveforms of the AC-DC converter in FIG. 18A during a switching cycle according to an embodiment of the present disclosure.
FIG. 19 illustrates a generalized isolated three-phase ZVS PFC DCM AC-DC converter based on a total of 6m (m = 1, 2, 3, ... ) diodes and two sets of 4n (n = 1, 2, 3, ... ) half-bridge modules with both frequency controller and phase-shift controller according to an embodiment of the present disclosure.
FIG. 20A illustrates a three-phase three-level flying capacitor ZVS PFC DCM AC-DC converter with four half-bridge modules according to an embodiment of the present disclosure.
FIG. 20B illustrates the key waveforms of the AC-DC converter in FIG. 20A during a switching cycle according to an embodiment of the present disclosure.
FIG. 21 illustrates a generalized isolated three-phase flying capacitor ZVS PFC DCM boost rectifier circuit based on a total of 6m (m = 1, 2, 3, ... ) diodes and a total of 4n (n = 1, 2, 3, ... ) half-bridge modules according to an embodiment of the present disclosure.
FIG. 22A illustrates a generalized isolated three-phase ZVS PFC DCMAC-DC converter based on a total of 6m (m = 1, 2, 3, ... ) diodes and 2n (n = 1, 2, 3, ... ) half-bridge modules with two isolated outputs according to an embodiment of the present disclosure.
FIG. 22B illustrates key waveforms of the AC-DC converter in FIG. 22A during a switching cycle according to an embodiment of the present disclosure.
FIG. 23 illustrates a generalized isolated three-phase ZVS PFC DCM AC-DC converter based on a total of 6m (m = 1, 2, 3, ... ) diodes and 2n (n = 1, 2, 3, ...) half-bridge modules with N isolated outputs according to an embodiment of the present disclosure.
FIG. 24 illustrates a generalized isolated three-phase three-level flying capacitor ZVS PFC DCMAC-DC converter based on a total of 6m (m = 1, 2, 3, ... ) diodes and 4n (n = 1, 2, 3, ... ) half-bridge modules with N isolated outputs according to an embodiment of the present disclosure.

### DETAILED DESCRIPTION OF THE PREFERRED EMBODIMENT

The inventors have recognized and appreciated the need for a low-cost, low input-current harmonic, and high power factor three-phase isolated AC-DC converter with high scalability for high input voltage and high power applications. The present disclosure relates to a three-phase AC-DC converter, which offers a very low THD of the input current and a good power factor with the capability of soft-switching of the active switches.

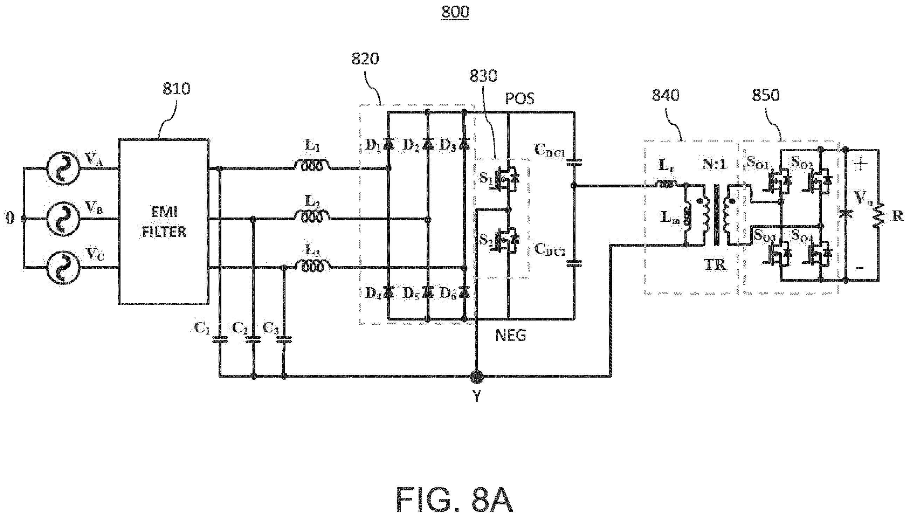

FIG. 8A shows an isolated three-phase zero-voltage switching (ZVS), power-factor-correction (PFC), discontinuous-conduction mode (DCM) AC-DC converter 800, having low input-current harmonic, according to an embodiment of the present disclosure. The AC-DC converter 800 includes three boost inductors L₁, L₂, and L₃ coupled through an EMI filter 810 to three-phase input voltage terminals V_{A}, V_{B}, and Vc, and three capacitors C₁, C₂, and C₃ connected in a "Y" or star configuration. Each of capacitors C₁, C₂, and C₃ is connected to a corresponding one of three-phase input voltage terminals V_{A}, V_{B}, and Vc through an EMI filter 810.

Boost inductors L₁, L₂, and L₃ are followed by a three-phase diode bridge 820 and a half-bridge circuit 830. Half-bridge circuit 830 includes two active switches S₁ and S₂, serially connected between the positive terminal POS and the negative terminal NEG of three-phase diode bridge 820, where the midpoint of the two active switches S₁ and S₂ is connected to a connection point (i.e., neutral point or neutral terminal) Y of capacitors C₁, C₂, and C₃.

Two serially connected DC-link capacitors C_{DC1} and C_{DC2} are coupled to three-phase diode bridge 820 in parallel, i.e., between positive and negative terminals POS, and NEG. The midpoint of the two DC-link capacitors C_{DC1} and C_{DC2} is connected to one primary side terminal of transformer 840, while the midpoint of active switches S₁ and S₂ is connected to the other primary side terminal of transformer 840.

A full active bridge 850 including switches S_{O1}, S_{O2}, S_{O3}, and S_{O4} is connected to the secondary side of transformer 840. It is appreciated that active switches S₁ and S₂ and switches S_{O1}, S_{O2}, S_{O3}, and S_{O4} may be any suitable switch, such as a metal-oxide-semiconductor field-effect transistor (MOSFET), an insulated gate bipolar transistor (IGBT) with an antiparallel diode, and the like.

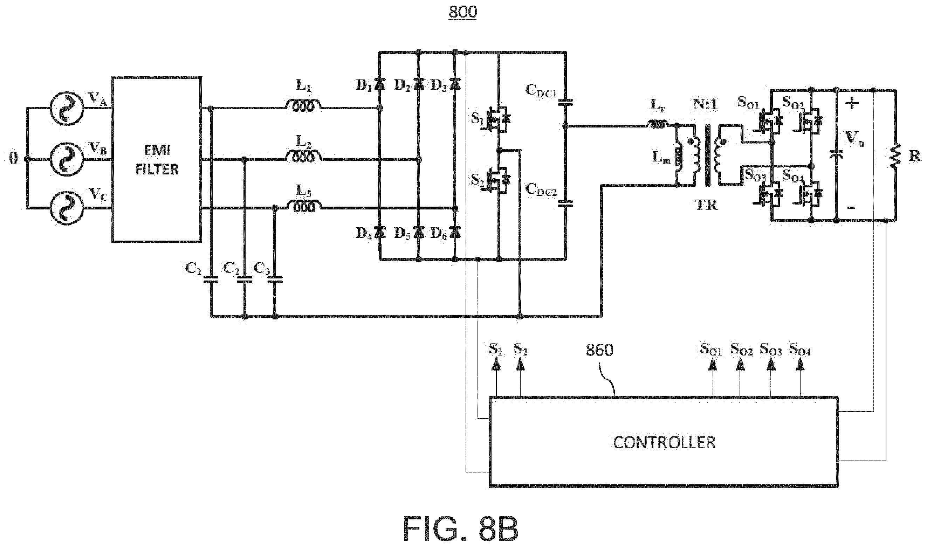

FIG. 8B illustrates AC-DC converter 800 of FIG. 8A coupled with a controller 860, according to an embodiment of the present disclosure. Controller 860 obtains information from the DC-link of three-phase diode bridge 820 (e.g., DC-link voltage) and/or from the output of full active bridge 850 (e.g., output current, output voltage, and output power). Based on the information, the controller 860 adjusts control variables, such as the switching frequency and the phase shift between active switches S₁ and S₂ at primary side, and switches S_{O1}, S_{O2}, S_{O3}, and S_{O4} at secondary side, to regulate the DC-link voltage, output voltage, output current, and output power.

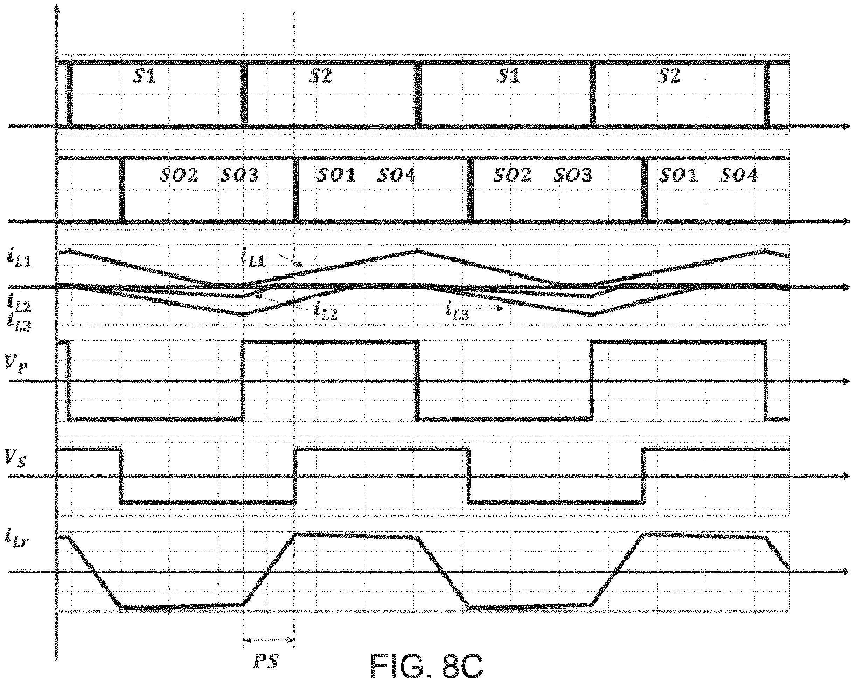

FIG. 8C illustrates key waveforms for AC-DC converter 800 of FIG. 8A during a switching cycle according to an embodiment of the present disclosure. The reference directions of currents and voltages in FIG. 8C corresponds to the 60-degree segments of a line cycle when Va > 0, V_{B} < 0, and Vc < 0 (V_{A}, V_{B} and Vc represent the voltages at the input voltage terminals V_{A}, V_{B} and Vc respectively). As shown in FIG. 8C, active switches S₁ and S₂ operate in a complementary fashion with a short dead time between the turn-on of one active switch and the turn-off of the other active switch. In addition, switches S_{O2} and S_{O3} have identical gate signals, while switches S_{O1} and S_{O4} have identical gate signals. The boost inductor currents i_{L1}, i_{L2}, and i_{L3} are in the discontinuous conduction mode (DCM) because the currents are reset to zero in every switching cycle. A phase shift PS is introduced between the gate signal of active switch S₂ and the gate signal of switch Soi. Consequently, the primary side voltage V_{P} of transformer 840 has the same phase shift angle as the secondary side voltage Vs of transformer 840. The transformer current i_{Lr} has a typical trapezoidal waveform as that in a conventional DAB converter.

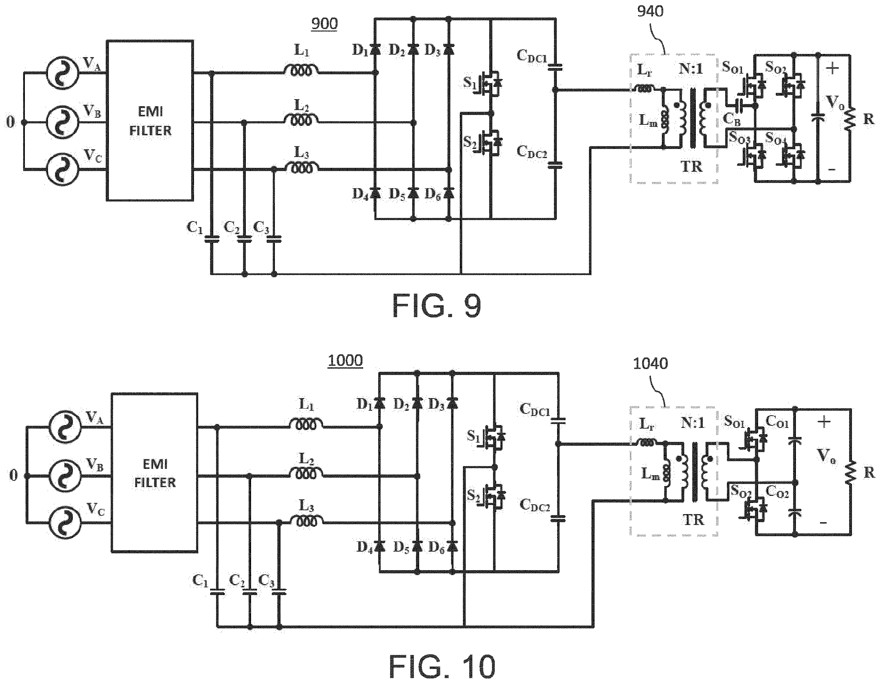

FIG. 9 illustrates an isolated three-phase ZVS PFC DCM AC-DC converter 900 with a blocking capacitor C_{B} at the secondary side. Blocking capacitor C_{B} is connected between one of the secondary side terminals of transformer 940 and a midpoint of a half-bridge circuit (including switches Soi and S_{O3}) at the secondary side. Blocking capacitor C_{B} blocks the potential DC component from the secondary side full bridge (including switches Soi, S_{O2}, S_{O3}, and S_{O4}) so that the secondary side of transformer 940 does not suffer saturation.

In an alternative embodiment, the secondary side active full-bridge circuit of AC-DC converter 900 in FIG. 9 can be replaced by a typical half-bridge circuit to further reduce the number of active components. FIG. 10 illustrates an isolated three-phase ZVS PFC DCMAC-DC converter 1000 with an active half-bridge circuit at the secondary side of transformer 1040 according to an embodiment of the present disclosure. The operation of AC-DC converter 1000 in FIG. 10 is very similar to AC-DC converter 800 in FIG. 8. The primary side voltage V_{P} of transformer 1040 has a controllable phase shift angle with respect to secondary side voltage Vs. Transformer current i_{Lr} is a typical trapezoidal waveform as that in a conventional DAB converter.

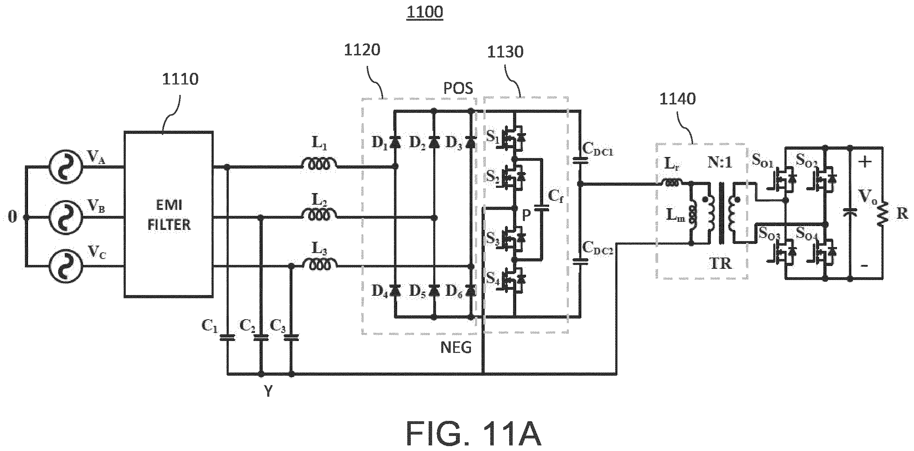

FIG. 11A illustrates an isolated three-phase three-level ZVS PFC DCM AC-DC converter 1100 according to an embodiment of the present disclosure. The AC-DC converter 1100 includes three boost inductors L₁, L₂, and L₃ coupled through an EMI filter 1110 to three-phase input voltage terminals V_{A}, V_{B}, and Vc, and three capacitors C₁, C₂, and C₃ connected in a Y or star configuration. Boost inductors L₁, L₂, and L₃ are followed by a three-phase diode bridge 1120 and a three-level flying capacitor circuit 1130. Three-level flying capacitor circuit 1130 includes four active switches S₁, S₂, S₃, and S₄ connected in series between a positive terminal POS and a negative terminal NEG of three-phase diode bridge 1120, where the midpoint of the four active switches (i.e., point P between active switches S₂ and S₃) is connected to the connection point Y of the three capacitors C₁, C₂, and C₃. A flying or floating capacitor Cf is connected between the midpoint of the first two active switches S₁ and S₂ and the midpoint of the last two active switches S₃ and S₄. Two DC-link capacitors C_{DC1} and C_{DC2} are connected in series, which are coupled to the three-phase diode bridge 1120. The midpoint of DC-link capacitors C_{DC1} and C_{DC2} is connected to one primary side terminal of transformer 1140, while the midpoint (point P) of the four switches S₁, S₂, S₃, and S₄ is connected to the other primary side terminal of transformer 1140. A full active bridge including switches S_{O1}, S_{O2}, S_{O3}, and S_{O4} is connected to the secondary side of transformer 1140.

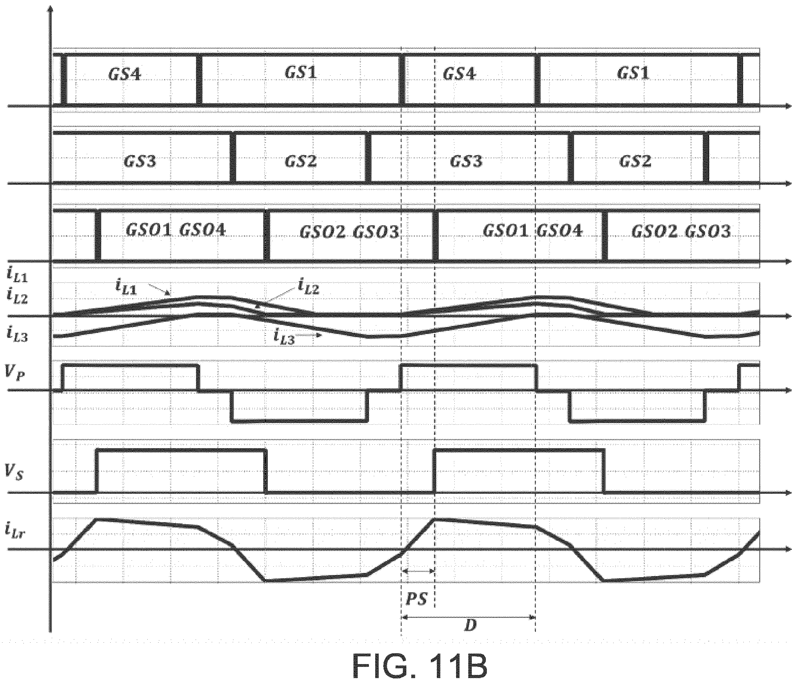

FIG. 11B illustrates the key waveforms for AC-DC converter 1100 in FIG. 11A during a switching cycle of the power stage according to an embodiment of the present disclosure. The reference directions of currents and voltages in FIG. 11B correspond to the 60-degree segments of a line cycle when Va > 0, V_{B} < 0, and Vc < 0. As can be seen from the gate-driving time diagrams of active switches S₁ to S₄ and switches S_{O1} to S_{O4} in FIG. 11B, active switches S₁ and S₄ operate in a complementary fashion with a short dead time between the turn-on of one active switch and the turn-off of the other active switch. Active switches S₂ and S₃ operate in a complementary fashion as well. The duty cycles of active switches S₄ and S₂ are identical and smaller or equal to 50%. The gate signal of active switch S₂ has a 180-degree phase shift angle with respect to the gate signal of active switch S₄. On the other hand, switches S_{O2} and S_{O3} have identical gate signals while switches S_{O1} and S_{O4} have identical gate signals. Switches S_{O1} and S_{O2} operate in a complementary fashion. The currents of boost inductors L₁, L₂, and L₃ are in DCM, where the currents reset in every switching cycle. A phase shift PS is introduced between the gate signal of active switch S₄ and the gate signal of switch Soi. The transformer primary side voltage V_{P} is a typical three-level voltage, with a duty cycle D being determined by the duty cycle of active switch S₄. The transformer current i_{Lr} is a typical trapezoidal waveform.

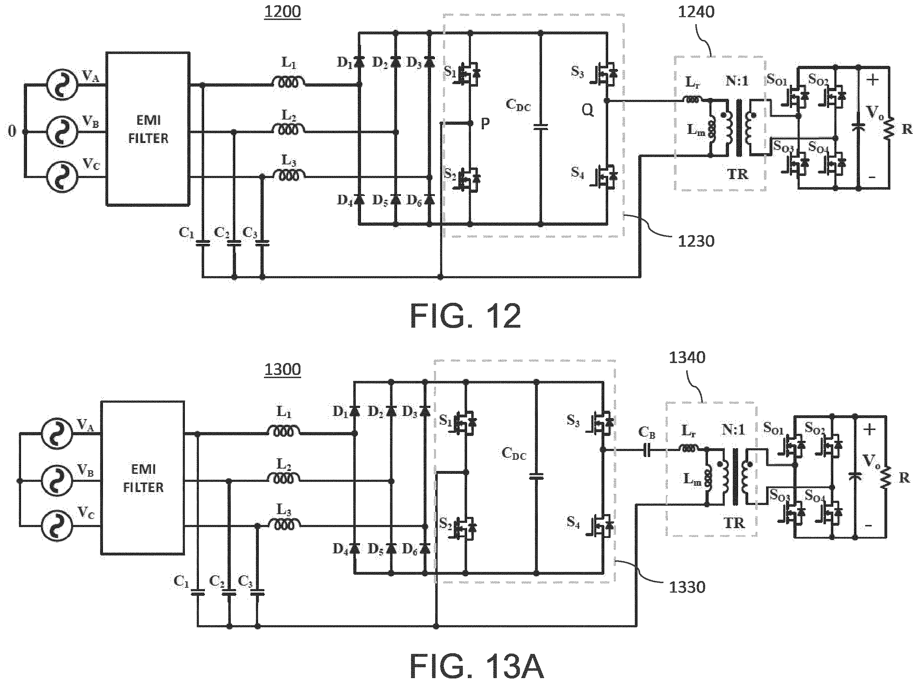

FIG. 12 shows an isolated three-phase ZVS PFC DCM AC-DC converter 1200 with an active full-bridge circuit 1230 on the primary side according to an embodiment of the present disclosure. Active full-bridge circuit 1230 includes active switches S₁ to S₄, which replace half-bridge circuit 830 as shown in FIG.8A. The full-bridge AC points P and Q are connected to the primary side of a transformer 1240. A DC-link capacitor C_{DC} is connected between the positive and negative terminals of the three-phase diode bridge.

FIG. 13A illustrates an isolated three-phase ZVS PFC DCM AC-DC converter 1300 with an active full-bridge circuit 1330 and a blocking capacitor C_{B} on the primary side according to an embodiment of the present disclosure. In this embodiment, a blocking capacitor C_{B} is inserted between active full-bridge circuit 1330 and a transformer 1340 to block the potential DC component to prevent saturation.

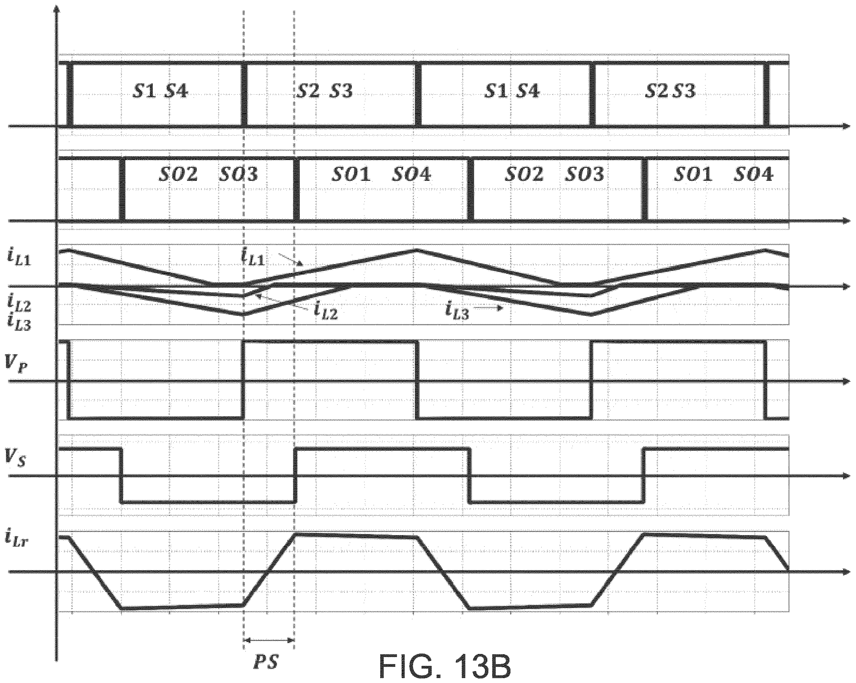

FIG. 13B illustrates key waveforms for AC-DC converter 1300 in FIG. 13A during a switching cycle of the power stage according to an embodiment of the present disclosure. The reference directions of currents and voltages in FIG. 13B correspond to the 60-degree segments of a line cycle when Va > 0, V_{B} < 0, and Vc < 0. As can be seen from the gate-driving time diagrams of active switches S₁ to S₄ and switches S_{O1} to S_{O4}, active switches S₁ and S₂ operate in a complementary fashion with a short dead time between the turn-on of one active switch and the turn-off of the other active switch. Active switches S₁ and S₄ have identical gate signals while active switches S₂ and S₃ have identical gate signals. Switches S_{O2} and S_{O3} have identical gate signals while switches S_{O1} and S_{O4} have identical gate signals. The currents of boost inductors L₁, L₂, and L₃ are in DCM, where the currents reset in every switching cycle. A phase shift is introduced between the gate signal of active switch S₂ and the gate signal of switch Soi. Consequently, the transformer's primary side voltage V_{P} has the same phase shift angle with respect to the secondary side voltage Vs. The transformer current i_{Lr} is a typical trapezoidal waveform.

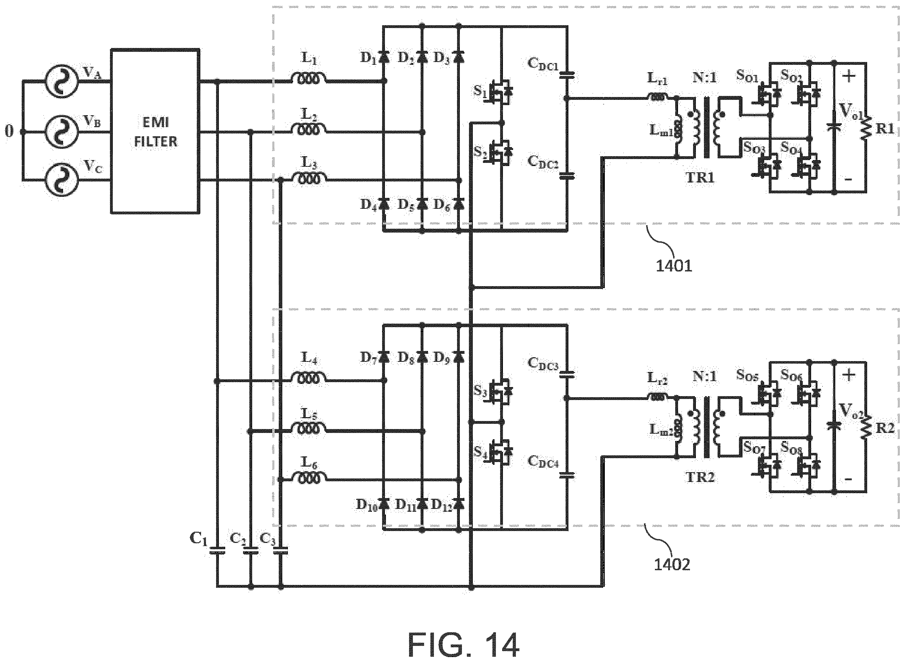

FIG. 14 illustrates interleaved or paralleled isolated three-phase ZVS PFC DCM AC-DC converters according to an embodiment of the present disclosure. As shown in FIG. 14, in this embodiment, two converter modules 1401 and 1402 as shown in FIG. 8A can be paralleled or interleaved. In a directly parallel operation, the switching signals in each of converter modules 1401 and 1402 are the same as the switching signals shown in FIG. 8C. In an interleaved operation, all of the switching signals in the second converter module 1402 are interleaved 180 degrees relative to the switching signals in the first converter module 1401.

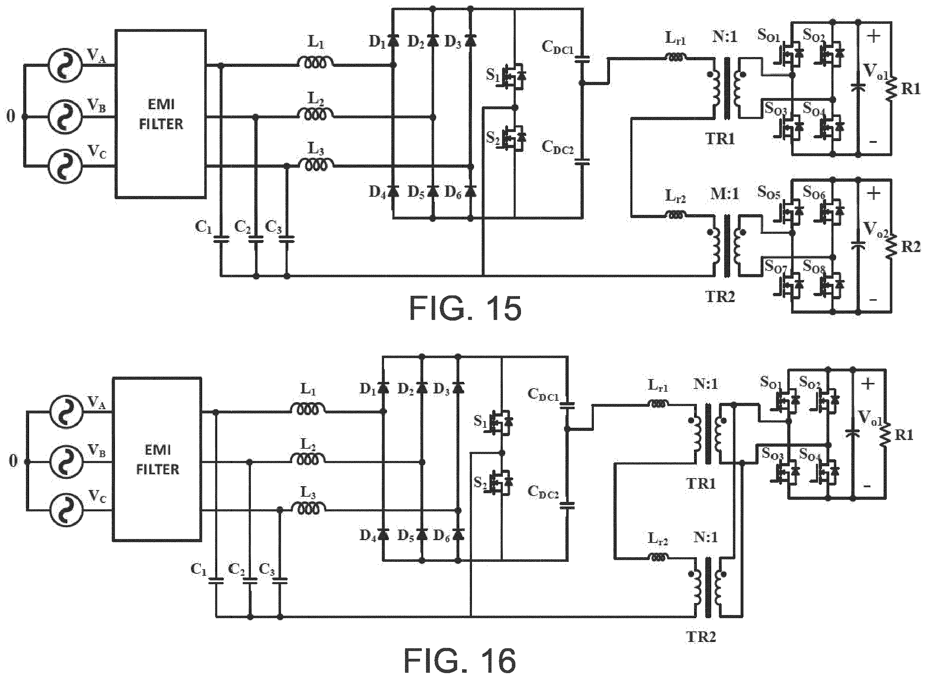

FIG. 15 illustrates an isolated three-phase ZVS PFC DCM AC-DC converter with two transformers TR1 and TR2 connected in series on the primary side and two separated outputs according to an embodiment of the present disclosure. The first primary side terminal of the first transformer TR1 is connected to the midpoint of two DC-link capacitors C_{DC1} and C_{DC2}, and the second primary side terminal of the first transformer TR1 is connected to the first primary side terminal of the second transformer TR2. The second primary side terminal of the second transformer TR2 is connected to the midpoint of the two active switches S₁ and S₂. The secondary side of the first transformer TR1 is coupled to a full active bridge for the first output, while the secondary side of the second transformer TR2 is coupled to another full active bridge for the second output.

FIG. 16 illustrates an isolated three-phase ZVS PFC DCM AC-DC converter with two transformers TR1 and TR2 connected in series on the primary side and connected in parallel on the secondary side according to an embodiment of the present disclosure. As shown in FIG. 16, because the secondary sides of transformers TR1 and TR2 are connected in parallel, only one full active bridge is implemented.

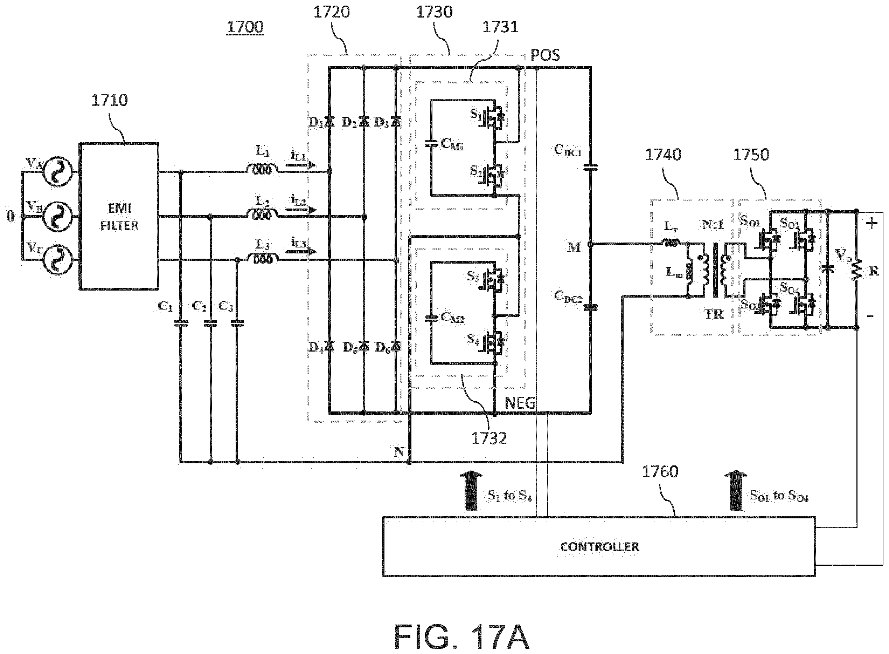

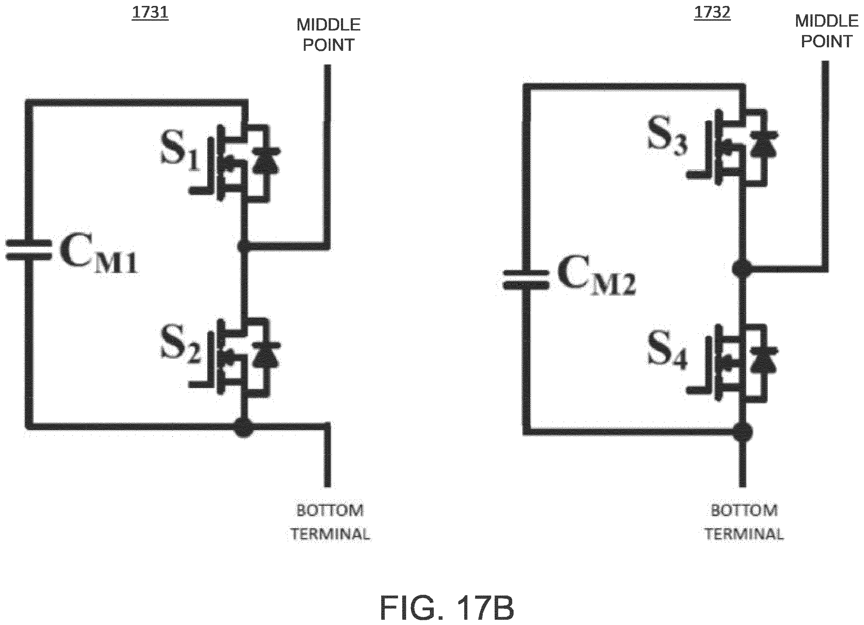

FIG. 17A illustrates an isolated three-phase ZVS PFC DCM AC-DC converter 1700, having low input-current harmonic, with two half-bridge modules 1731 and 1732 according to an embodiment of the present disclosure. FIG. 17B illustrates an enlarged view of half-bridge modules 1731 and 1732 of AC-DC converter 1700 in FIG. 17A. AC-DC converter 1700 includes three boost inductors L₁, L₂, and L₃ coupled through an EMI filter 1710 to three-phase input voltage terminals V_{A}, V_{B}, and Vc, and three capacitors C₁, C₂, and C₃ connected in the Y or star configuration. Boost inductors L₁, L₂, and L₃ are followed by a three-phase diode bridge 1720 and a switching converter stage 1730.

Switching converter stage 1730 includes two half-bridge modules 1731 and 1732. As shown in FIG. 17B, half-bridge module 1731 includes two active switches S₁ and S₂ connected in series and coupled to a capacitor C_{M1} to form a loop. Likewise, half-bridge module 1732 includes two active switches S₃ and S₄ connected in series and coupled to a capacitor C_{M2} to form a loop. Referring to FIGs. 17A and 17B, the middle point of half-bridge module 1731 is connected to the positive terminal POS of the three-phase diode bridge 1720 and the bottom terminal of half-bridge module 1731 is connected to the middle point of half-bridge module 1732. The bottom terminal of half-bridge module 1732 is connected to the negative terminal NEG of the three-phase diode bridge 1720.

A common point N of input filter capacitors C₁, C₂, and C₃ is connected to the bottom terminal of half-bridge module 1731, and one primary side terminal of transformer 1740. The midpoint M of two DC-link capacitors C_{DC1} and C_{DC2} is connected to the other primary terminal of transformer 1740. A full active bridge 1750 is connected to the secondary side of transformer 1740.

The Y-connected capacitors C₁, C₂, and C₃ create a virtual ground, a node with the same voltage potential as the input voltage source neutral common point (or neutral terminal) N, which is not physically available in a three-wire system. This common point N is directly connected to the midpoint between two half-bridge modular circuits (i.e., half-bridge modules 1731 and 1732), and the three input currents are decoupled with each other. Due to this decoupling, the current in each of the three boost inductors L₁, L₂, and L₃ is now dependent only on the corresponding input phase voltage, which results in low THD and a high power factor.

AC-DC converter 1700 can further include a controller 1760 to provide switching signals to active switches S₁, S₂, S₃, S₄ at primary side (i.e., the primary side switches), and switches S_{O1}, S_{O2}, S_{O3}, S_{O4} at secondary side (i.e., the secondary side switches). The switching signals for active switches S₁ and S₄ are identical and the switching signals for active switches S₂ and S₃ are identical. The switching signals can be fixed at a duty cycle of substantially 50% and the switching signals of the two active switches in each of the half-bridge modules 1731, and 1732 are complementary. The switching signals may provide a small dead time where each pair of the active switches is turned off slightly before the opposite pair is turned on, such that all active switches S₁, S₂, S₃, S₄ are briefly off during the dead time. When active switches S₁ and S₄ are turned on, it can be seen that common point N is connected to the negative terminal NEG of three-phase diode bridge 1720, that active switch S₃ is blocking the voltage of capacitor C_{M2}, and that capacitor C_{M1} becomes a DC-link capacitor. Similarly, when active switches S₂ and S₃ are turned on, it can be seen that common point N is connected to the positive terminal POS of three-phase diode bridge 1720, that active switch S₁ is blocking the voltage of capacitor C_{M1}, and that capacitor C_{M2} becomes a DC-link capacitor. Thus, the capacitor voltage of either capacitor C_{M1} or capacitor C_{M2} is equal to the DC-link voltage, and each of active switches S₁, S₂, S₃, S₄ needs to block the DC-link voltage in this configuration.

On the secondary side, the switching signals for switches S_{O1} and S_{O4} are identical and the switching signals for switches S_{O2} and S_{O3} are identical. The switching signals can be fixed at a duty cycle of substantially 50% and the switching signals of switches S_{O1} and S_{O2} are complementary. The switching frequencies of all switches are identical. A phase shift angle may be introduced between the switching signal of active switch S₄ and the switching signal of switch Soi.

In one embodiment, controller 1760 can be adapted to vary the switching frequency of all switches and the phase shift angle based on at least one of the input three-phase voltage, the input three-phase current, the DC-link capacitor voltages, the output voltage, and the output current. Any suitable device may be used to measure the voltages or currents that the controller 1760 uses for control (e.g., analog to digital converter, current to voltage converter, etc.). The minimum switching frequency is determined by the full load and minimum input voltage, while the maximum switching frequency is determined by the light load and maximum input voltage. To avoid a very high-frequency operation, if AC-DC converter 1700 is required to operate at a very light load or even no load, a controlled burst mode or pulse skip mode can be implemented. Pulse width modulation control is another possible control scheme in this converter, but realizing ZVS at full load range is not feasible. The switching frequency may be determined by controller 1760 from the sensed values in any suitable way. For example, Ref. [4] describes variable frequency control that may be used in some embodiments.

One challenge of the operation of the circuit shown in FIG. 17A is to balance the voltage of the flying capacitors C_{M1} and C_{M2} of half-bridge modules 1731 and 1732. During the operation, the voltages of both capacitors C_{M1} and C_{M2} in half-bridge modules 1731 and 1732 are sensed. Controller 1760 can change the duty cycle of active switches S₁, S₂, S₃, and S₄ when any unbalanced voltage is detected. To increase the reliability of AC-DC converter 1700, a relatively larger capacitance is preferred for capacitors C_{M1} and C_{M2} in half-bridge modules 1731 and 1732 to make it less likely to suffer voltage imbalance during the operation.

AC-DC converter 1700 offers a low THD of the input current and a high power factor along with ZVS of the switches by operating the boost inductors in DCM and by implementing the variable-frequency modulation and phase shift modulation control strategy.

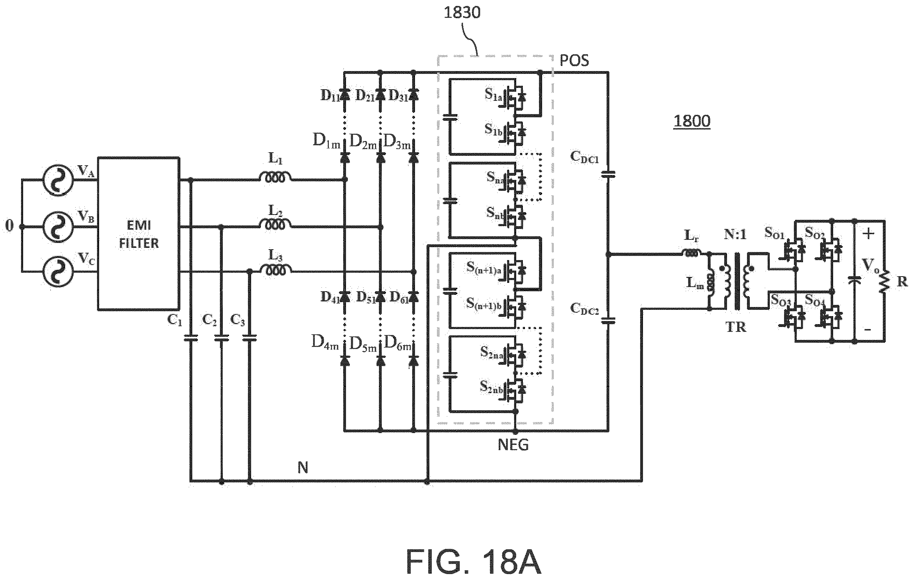

The circuit in FIG. 17A can be implemented differently in other embodiments. For example, FIG. 18A shows an implementation in a high-voltage application. As shown in FIG. 18A, in this embodiment, a generalized isolated three-phase ZVS PFC DCM AC-DC converter 1800 includes a total of 6m diodes (where m = 1, 2, 3, ... ) and 2n half-bridge modules (where n = 1, 2, 3, ... ). Each diode in the three-phase diode bridge 1720 in FIG. 17A is replaced by m diodes connected in series to block the high input voltage. A passive snubber circuit may be required to balance the blocking voltage for each diode.

In a switching converter stage 1830, a total of 2n half-bridge modules are implemented. The middle point of every half-bridge module is connected to the bottom terminal of the previous half-bridge module ("cascaded"). The middle point of the first half-bridge module is connected to the positive terminal POS of the three-phase diode bridge and the bottom terminal of the last half-bridge module is connected to the negative terminal NEG of the three-phase diode bridge. The common point N of the input filter capacitors C₁, C₂, and C₃ is connected to the midpoint between the upper n half-bridge modules and the lower n half-bridge modules, and also to one primary side terminal of the transformer TR.

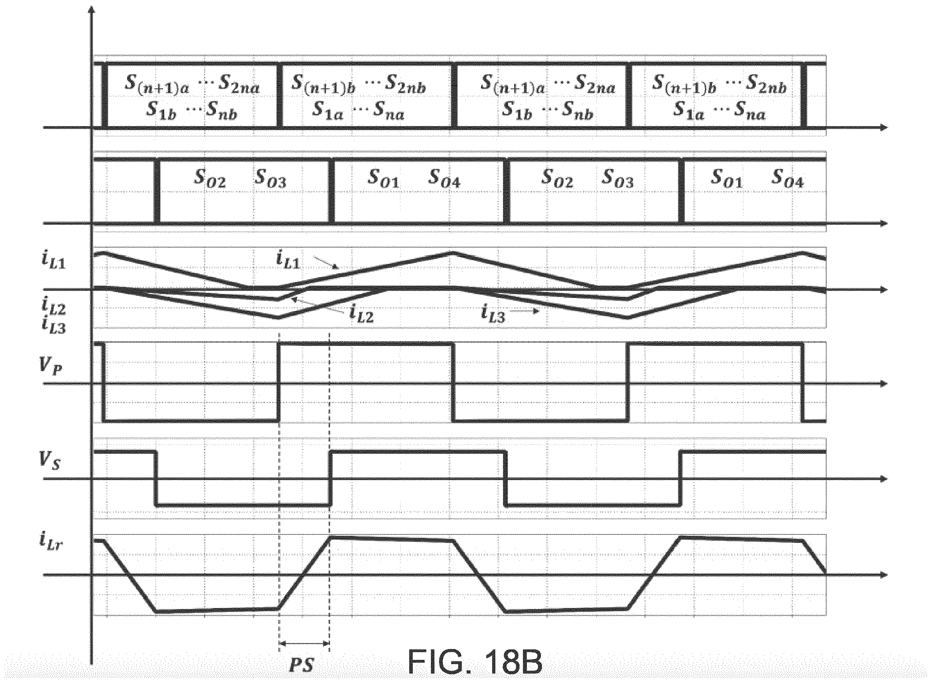

FIG. 18B illustrates the key waveforms of AC-DC converter 1800 in FIG. 18A during a switching cycle according to an embodiment of the present disclosure. The control signals of active switches S₁ₐ, S₂ₐ, ... , Sₙₐ are identical to the control signals of active switches S_{(n+1)b}, S_{(n+2)b}, ... , S_{2nb}, which are fixed at a duty cycle of substantially 50%. The control signals of active switches S_{1b}, S_{2b}, ... , S_{nb} are identical to the control signals of active switches S₍ₙ₊₁₎ₐ, S₍ₙ₊₂₎ₐ, ... , S₂ₙₐ, which are also fixed at a duty cycle of substantially 50%. The control signals of the two active switches of each half-bridge module are complementary. In other words, the top active switch of each half-bridge module in the top half leg and the bottom active switch of each half-bridge module in the bottom half leg are turned on and off simultaneously. The bottom active switch of each half-bridge module in the top half leg and the top active switch of each half-bridge module in the bottom half leg are turned on and off simultaneously. It can be seen that when the top active switch of each half-bridge module on the top half leg and the bottom active switch of each half-bridge module on the bottom half leg are turned on, the common point N is connected to the negative terminal NEG of the three-phase diode bridge. Similarly, the common point N is connected to the positive terminal POS of the three-phase diode bridge when the bottom active switch of each half-bridge module on the top half leg and the top active switch of each half-bridge module on the bottom half leg are turned on.

When the top active switch of each half-bridge module in the top half leg and the bottom active switch of each half-bridge module in the bottom half leg are on, the capacitors in each half-bridge module in the top half leg are connected in series to become the DC-link capacitors. When the bottom active switch of each half-bridge module in the top half leg and the top active switch of each half-bridge module in the bottom half leg are on, the capacitors in each half-bridge module in the bottom half leg are connected in series to become the DC-link capacitors. As the total voltage of the DC-link capacitors is equal to the DC bus voltage between positive terminal POS and negative terminal NEG, the voltage of each capacitor in each half-bridge module is only 1/n of the total DC bus voltage and each active switch only needs to block 1/n of the total DC bus voltage, which makes it possible to use low voltage active switches in very high input and output voltage applications.

During the operation, the voltages of all capacitors in half-bridge modules may be sensed. A controller can change the duty cycle of the active switches when any voltage unbalances are detected. To increase the reliability of the system, a relatively larger capacitance is preferred in the half-bridge module to make it less likely to suffer voltage imbalance during the operation.

On the secondary side, the switching signals can be fixed at a duty cycle of substantially 50%. The switching signals of S_{O1} and S_{O2} are complementary, and so are the switching signals of S_{O3} and S_{O4}. A phase shift angle can be introduced between the switching signal of active switches S₁ₐ to Sₙₐ and the switching signal of switch Soi.

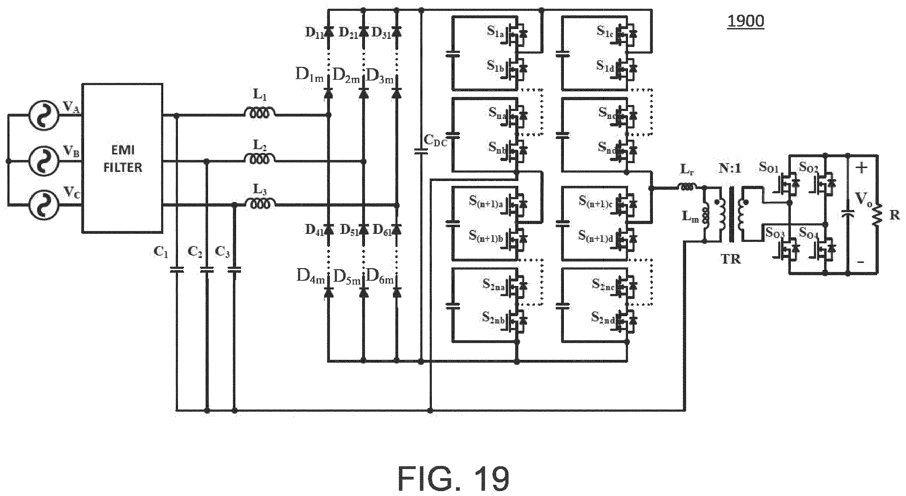

FIG. 19 illustrates a generalized isolated three-phase ZVS PFC DCMAC-DC converter 1900 based on a total of 6m diodes (where m = 1, 2, 3, ... ) and two sets of 2n half-bridge modules (where n = 1, 2, 3, ... ) with both frequency controller and phase-shift controller according to an embodiment of the present disclosure. The additional 2n half-bridge modules are connected in the same fashion as the existing 2n half-bridge modules and they are coupled between the positive terminal and the negative terminal of the three-phase diode bridge. The circuit further includes a transformer followed by a full active bridge. The two sets of 2n half-bridge modules behave like the switching converter stage 1830 as shown in FIG. 18A.

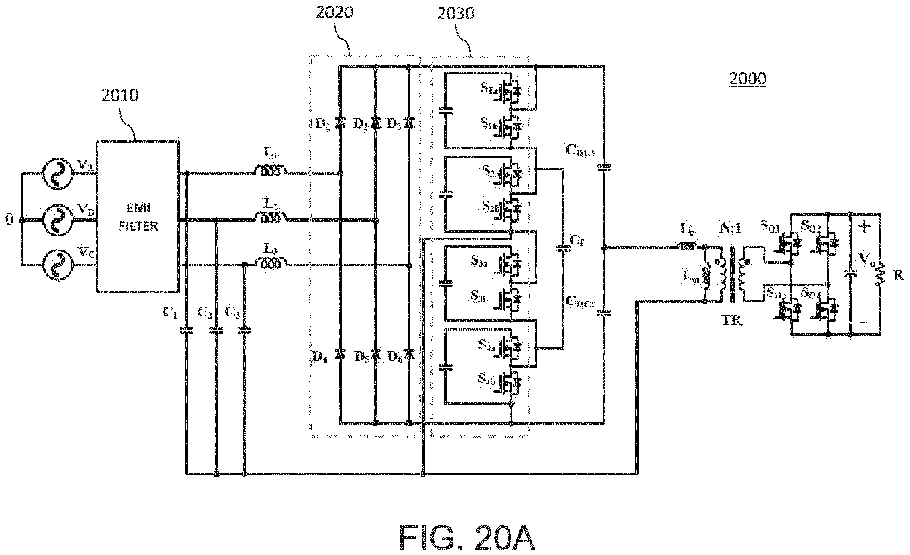

FIG. 20A illustrates a three-phase three-level flying capacitor ZVS PFC DCMAC-DC converter 2000, having low input-current harmonic, with four half-bridge modules according to an embodiment of the present disclosure. AC-DC converter 2000 includes three boost inductors L₁, L₂, and L₃ coupled through an EMI filter 2010 to three-phase input voltage terminals V_{A}, V_{B}, and Vc, and three capacitors C₁, C₂, and C₃ connected in the Y or star configuration. Boost inductors L₁, L₂, and L₃ are followed by a three-phase diode bridge 2020 and a switching converter stage 2030. Switching converter stage 2030 includes four half-bridge modules, wherein each half-bridge module includes two active switches in series and then coupled with a capacitor. One terminal of a flying or floating capacitor Cf is connected to the bottom terminal of the first half-bridge module and the other terminal of the flying capacitor Cf is connected to the bottom terminal of the third half-bridge module.

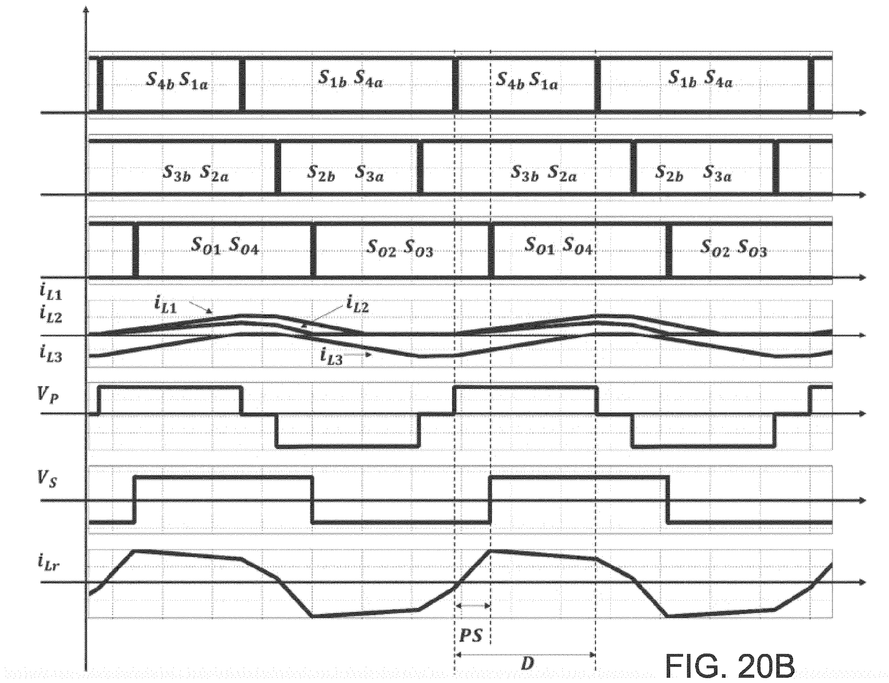

FIG. 20B illustrates the key waveforms of AC-DC converter 2000 in FIG. 20A during a switching cycle of the power stage according to an embodiment of the present disclosure. The reference directions of currents and voltages in FIG. 20B correspond to the 60-degree segments of a line cycle when Va > 0, V_{B} < 0, and Vc < 0. As can be seen from the gate-driving time diagrams of active switches S₁ₐ to S_{4b} and switches S_{O1} to S_{O4}, the two active switches in each half-bridge module operate in a complementary fashion with a short dead time between the turn-on of one switch and turn-off of the other switch. The duty cycle of active switches S_{4b} and S_{2b} are identical and smaller or equal to 50%. The gate signal of active switch S_{2b} has a 180-degree phase shift angle respecting the gate signal of active switch S_{4b}. On the other hand, switches S_{O2} and S_{O3} have identical gate signals while switches S_{O1} and S_{O4} have identical gate signals. Switches S_{O1} and S_{O2} operate in a complementary fashion. The boost inductor currents are in DCM, where the currents reset in every switching cycle. A phase shift PS is introduced between the gate signal of active switch S_{4b} and the gate signal of switch Soi. The transformer's primary side voltage V_{P} is a typical three-level voltage, and duty cycle D is determined by the duty cycle of active switch S_{4b}. The transformer current i_{Lr} is a typical trapezoidal waveform.

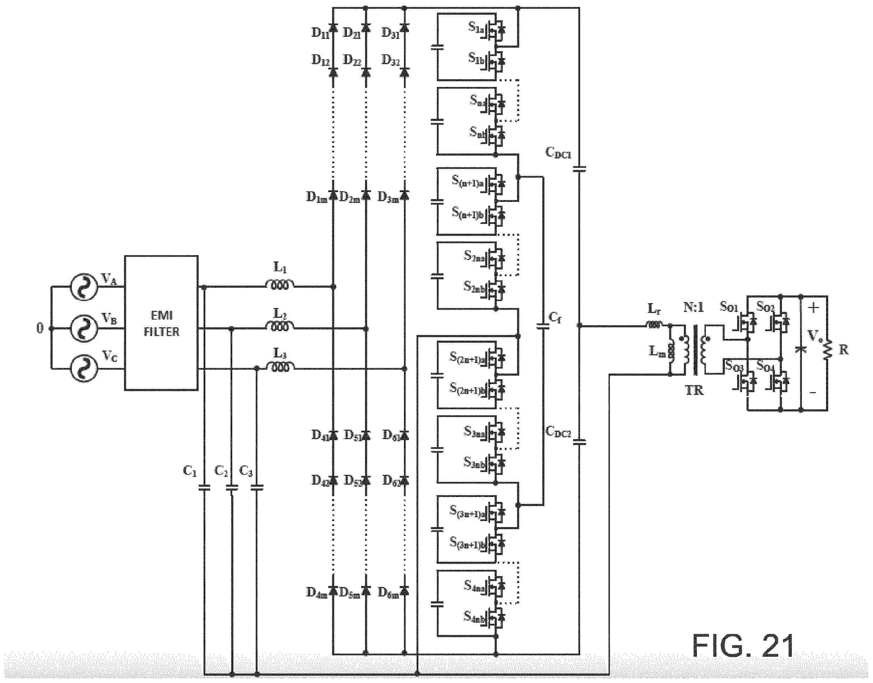

FIG. 21 illustrates a generalized isolated three-phase flying capacitor ZVS PFC DCM boost rectifier circuit based on a total of 6m diodes (where m = 1, 2, 3, ... ) and a total of 4n half-bridge modules (where n = 1, 2, 3, ... ) according to an embodiment of the present disclosure. As shown in FIG. 21, each half-bridge module in switching converter stage 2030 of FIG. 20A is replaced by n number of half-bridge modules connected in a way as shown in FIG. 18A to block high voltage.

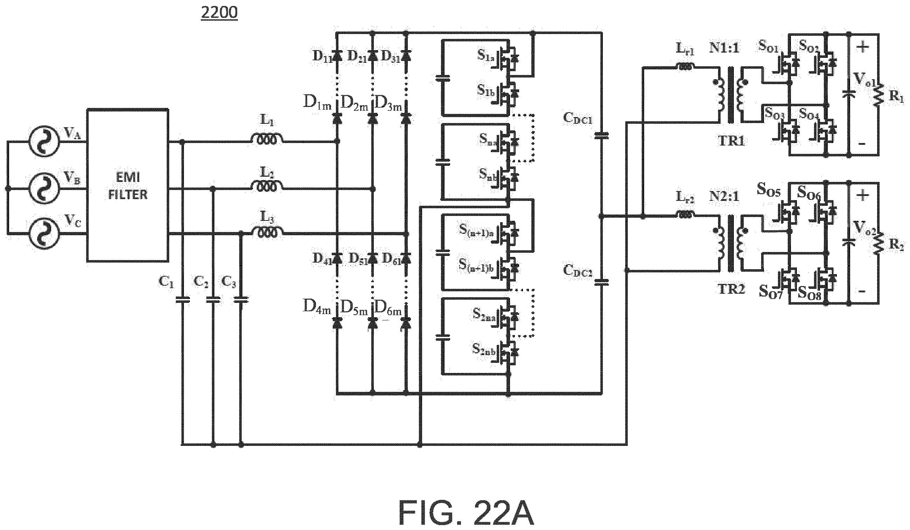

FIG. 22A illustrates a generalized isolated three-phase ZVS PFC DCM AC-DC converter 2200 based on a total of 6m diodes (where m = 1, 2, 3,...) and 2n half-bridge modules (where n = 1, 2, 3,...) with two isolated outputs, according to an embodiment of the present disclosure. In this embodiment, two transformers TR1 and TR2 are coupled to the primary side circuit of FIG. 18A. The two transformers' primary sides and the primary side circuit are connected in the same way as shown in FIG. 18A. In other words, the two transformers' primary sides are connected in parallel. On the secondary side, each transformer is coupled with a full active bridge and an individual load. The primary side voltages of both transformers are identical and determined by the primary side operations. However, the output power and voltage of each output port can be individually controlled by the corresponding secondary side active bridge.

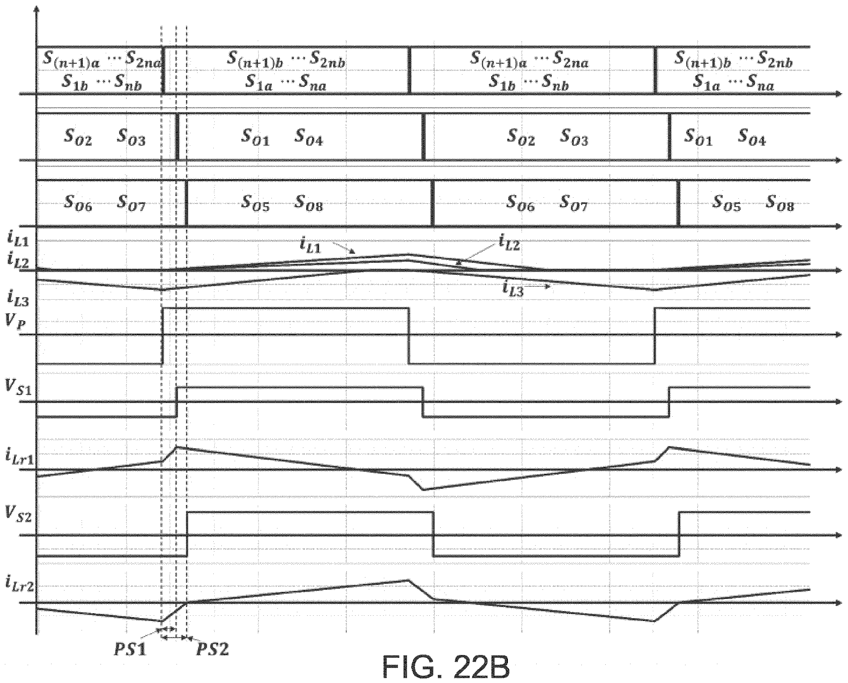

FIG. 22B illustrates key waveforms of AC-DC converter 2200 in FIG. 22A during a switching cycle of the power stage according to an embodiment of the present disclosure. The active switches at primary side (i.e., primary side switches) operate the same as shown in FIG.18B. Switches S_{O2} and S_{O3} have identical gate signals while switches S_{O1} and S_{O4} have identical gate signals. Switches S_{O1} and S_{O2} operate in a complementary fashion with a 50% duty cycle. Switches S_{O6} and S_{O7} have identical gate signals, while switches Sos and Sos have identical gate signals. Switches Sos and S_{O6} operate in a complementary fashion with a 50% duty cycle. The phase shift between active switch S₁ₐ and switch S_{O1} is PS1, while the phase shift between S₁ₐ and Sos is PS2. Due to the different phase shift angles and output voltage, the currents of the two transformers TR1 and TR2 are different. Consequently, the power of each output port can be controlled individually.

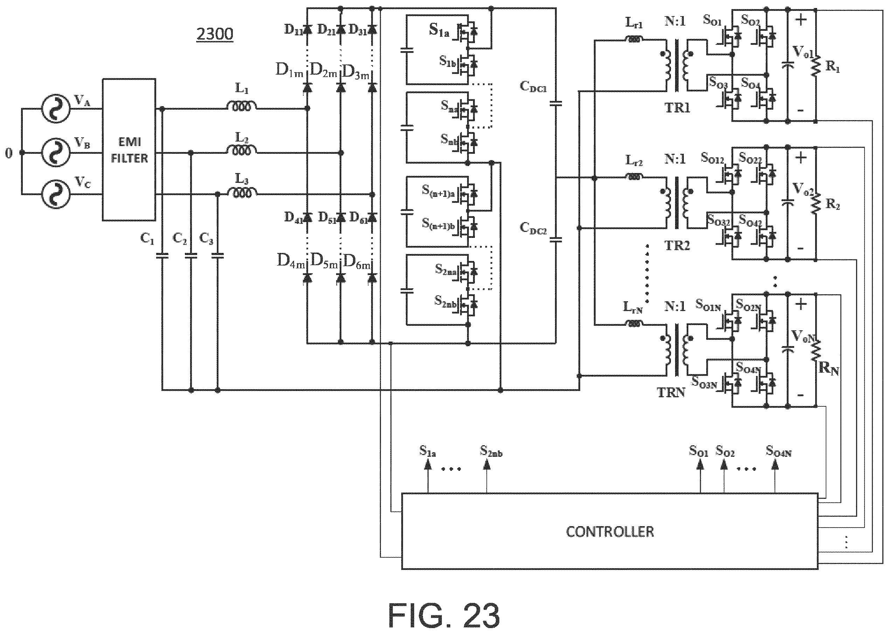

FIG. 23 illustrates a generalized isolated three-phase ZVS PFC DCMAC-DC converter 2300 based on a total of 6m diodes (where m = 1, 2, 3, ... ) and 2n half-bridge modules (where n = 1, 2, 3, ... ) with N isolated outputs, according to an embodiment of the present disclosure. In this embodiment, N transformers are coupled to the primary-side switching converter stage as shown in FIG. 22. Each transformer is followed by a full active bridge and a load. Each output current, voltage, and power are separately controlled by the phase shift angle between the transformer primary side voltage and the transformer secondary side voltage.

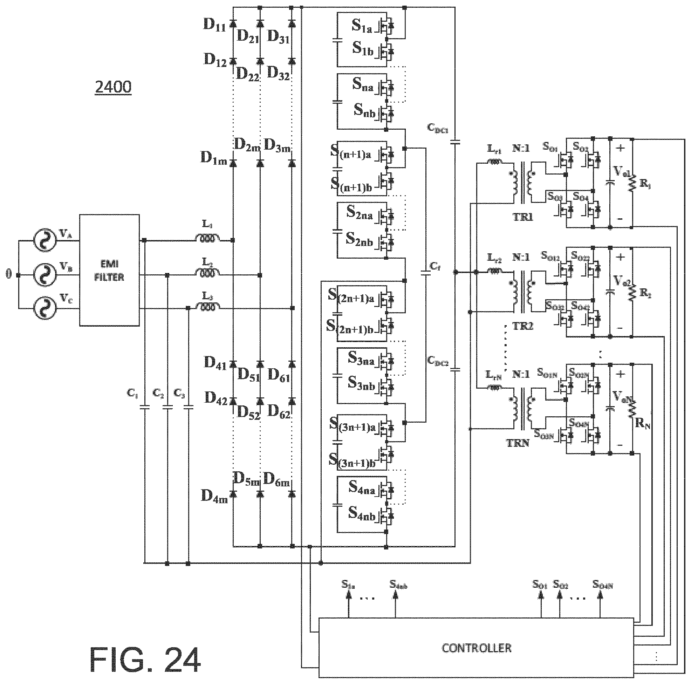

FIG. 24 illustrates a generalized isolated three-phase three-level flying capacitor ZVS PFC DCM AC-DC converter 2400 based on a total of 6m diodes (where m = 1, 2, 3, ... ) and 4n half-bridge modules (where n = 1, 2, 3, ... ) with N isolated outputs, according to an embodiment of the present disclosure. In this embodiment, a total of N transformers are coupled to the primary-side switching converter stage as shown in FIG. 21. Each transformer is followed by a full active bridge and a load. Each output current, voltage, and power are separately controlled by the phase shift angle between the transformer primary side voltage and the transformer secondary side voltage.

## Claims

1. An AC/DC converter (800), **characterized by** comprising:
a plurality of internal terminals including a positive terminal (POS), a negative terminal (NEG), and a neutral terminal (Y);
an input stage (820) electrically coupled to the positive, negative, and neutral terminals (POS, NEG, Y) and including at least three input terminals that are connectable to a three-phase AC power source;
a switching converter stage including a plurality of primary side switches (S₁, S₂) electrically coupled between the positive and negative terminals (POS, NEG);
an output stage electrically coupled to the switching converter stage and the neutral terminal (Y), the output stage including output terminals that are connectable to a load (R), thereby providing a DC voltage to the load (R), wherein the output stage comprises a transformer (TR) and an active bridge (850) including a plurality of secondary side switches (S_{O1}, S_{O2}, S_{O3}, S_{O4}); and
a controller (860) electrically coupled to the switching converter stage and the output stage to generate gate signals for the plurality of primary side switches (S₁, S₂) and the plurality of secondary side switches (S_{O1}, S_{O2}, S_{O3}, S_{O4}), wherein a phase shift (PS) is introduced between the gate signal of one of the plurality of primary side switches (S₂) and the gate signal of a corresponding one of the plurality of secondary side switches (S_{O1}).

2. The AC/DC converter (800) of claim 1, wherein the plurality of primary side switches of the switching converter stage comprises two active switches (S₁, S₂) and wherein a midpoint of the two active switches (S₁, S₂) is electrically coupled to the neutral terminal (Y).

3. The AC/DC converter (800) of claim 1, wherein the input stage comprises a three-phase diode bridge (820), and the AC/DC converter (800) further comprises:
a plurality of boost inductors (L₁, L₂, L₃), each being electrically coupled between a corresponding input terminal (V_{A}, V_{B}, V_{C}) of the three-phase AC power source through an EMI filter (810) and a corresponding leg of the three-phase diode bridge (820); and
a plurality of capacitors (C₁, C₂, C₃) each being connected between a corresponding input terminal (V_{A}, V_{B}, V_{C}) of the three-phase AC power source through the EMI filter (810) and the neutral terminal (Y).

4. The AC/DC converter (800) of claim 1, wherein the switching converter stage further comprises a plurality of DC-link capacitors (C_{DC1}, C_{DC2}) connected in series and coupled to the input stage (820) in parallel.

5. The AC/DC converter (800) of claim 4, wherein a midpoint of the plurality of DC-link capacitors (C_{DC1}, C_{DC2}) is electrically coupled to one primary side terminal of the transformer (TR), while a midpoint of the plurality of primary side switches (S₁, S₂) is electrically coupled to another primary side terminal of the transformer (TR).

6. The AC/DC converter of claim 4, wherein the output stage comprises:
a first transformer (FIG. 15-TR1) and a first active bridge connected to a secondary side of the first transformer (TR1), and
a second transformer (FIG. 15-TR2) and a second active bridge connected to a secondary side of the second transformer (TR2),
wherein a first primary side terminal of the first transformer (TR1) is connected to a midpoint of the plurality of DC-link capacitors (C_{DC1}, C_{DC2}),
wherein a second primary side terminal of the first transformer (TR1) is connected to a first primary side terminal of the second transformer (TR2), and
wherein a second primary side terminal of the second transformer (TR2) is connected to the neutral terminal (Y).

7. The AC/DC converter (900, 1000) of claim 1, wherein the active bridge comprises a full active bridge including four active switches (FIG. 9-S_{O1}, S_{O2}, S_{O3}, S_{O4}) or a half bridge including two active switches (FIG. 10-S_{O1}, S_{O2}).

8. The AC/DC converter (1100) of claim 1, wherein the switching converter stage comprises first, second, third, and fourth active switches (S₁, S₂, S₃, S₄) electrically coupled in series and a flying capacitor (C_{f}) electrically coupled between a midpoint between the first and second active switches (S₁, S₂) and a midpoint between the third and fourth active switches (S₃, S₄), wherein a midpoint (P) of the second and third active switches (S₂, S₃) is electrically coupled to the neutral terminal (Y).

9. The AC/DC converter (1200) of claim 1, wherein the switching converter stage comprises an active full-bridge circuit (1230) including first and second active switches (S₁, S₂) electrically coupled in series between the positive and negative terminals, and third and fourth active switches (S₃, S₄) electrically coupled in series between the positive and negative terminals, wherein a midpoint (P) between the first and second active switches (S₁, S₂) is electrically coupled to the neutral terminal (Y), and a midpoint (Q) between the third and fourth active switches (S₃, S₄) is electrically coupled to one primary side terminal of the transformer (TR).

10. The AC/DC converter (1200) of claim 9, further comprising a DC-link capacitor (C_{DC}) electrically coupled to the input stage in parallel.

11. The AC/DC converter (900, 1300) of claim 1 or 9, further comprising a blocking capacitor (C_{B}) electrically coupled between one of secondary side terminals of the transformer (FIG. 9-TR) and a midpoint of the active bridge, or electrically coupled between said midpoint (FIG. 13-Q) between the third and fourth active switches (S₃, S₄) and said one primary side terminal of the transformer (TR).

12. The AC/DC converter of claim 1, wherein the output stage comprises two transformers (FIG. 16-TR1, TR2) connected in series on a primary side of said two transformers (TR1, TR2) and connected in parallel on a secondary side of said two transformers (TR1, TR2).

13. The AC/DC converter (1700) of claim 1, wherein the switching converter stage (1730) includes a plurality of half-bridge modules (1731, 1732), each half-bridge module (1731) includes a capacitor (C_{M1}) and first and second active switches (S₁, S₂) serially connected to form a loop, a first one of the plurality of half-bridge modules (1731) is electrically coupled to the positive terminal (POS), a second one of the plurality of half-bridge modules (1732) is electrically coupled to the negative terminal (NEG), and at least two of the plurality of half-bridge modules (1731, 1732) are electrically coupled to the neutral terminal (N), wherein the controller (1760) generates gate signals for the first and second active switches (S₁, S₂, S₃, S₄) of the plurality of half-bridge modules (1731, 1732) and the plurality of secondary side switches (S_{O1}, S_{O2}, S_{O3}, S_{O4}), and a phase shift (PS) is introduced between the gate signal of one of the first and second active switches (S₁) of the plurality of half-bridge modules and the gate signal of a corresponding one of the plurality of secondary side switches (S_{O1}).

14. The AC/DC converter (1700) of claim 13, wherein the switching converter stage further comprises a plurality of DC-link capacitors (C_{DC1}, C_{DC2}) connected in series and coupled to the input stage in parallel, a midpoint (M) of the plurality of DC-link capacitors (C_{DC1}, C_{DC2}) is electrically coupled to one primary side terminal of the transformer (TR), and the input stage comprises a three-phase diode bridge (1720).

15. The AC/DC converter (1700) of claim 13, wherein the plurality of half-bridge modules of the switching converter stage comprises first and second half-bridge modules (1731, 1732), wherein a midpoint of the first and second active switches (S₁, S₂) of the first half-bridge module (1731) is connected the positive terminal (POS), wherein a connection point between the capacitor (C_{M1}) and the second active switch (S₂) of the first half-bridge module (1731) is connected to a midpoint of the first and second active switches (S₃, S₄) of the second half-bridge module (1732) and the neutral terminal (N), and wherein a connection point between the capacitor (C_{M2}) and the second active switch (S₄) of the second half-bridge module (1732) is connected to the negative terminal (NEG).

16. The AC/DC converter (1800) of claim 13, wherein the plurality of half-bridge modules of the switching converter stage (1830) comprises a total of 2n half-bridge modules, and n is a positive integer, wherein a middle point between the first and second active switches (Sₙₐ, S_{nb}) of each one of the 2n half-bridge modules is connected to a bottom terminal between the capacitor and the second active switch of a previous one of the 2n half-bridge module, except that the middle point between the first and second active switches (S₁ₐ, S_{1b}) of a first one of the 2n half-bridge modules is connected to the positive terminal (POS) and that the bottom terminal between the capacitor and the second active switch (S_{2nb}) of a last one of the 2n half-bridge modules is connected to the negative terminal (NEG), wherein the neutral terminal (N) is connected to a midpoint between upper n half-bridge modules and lower n half-bridge modules of the 2n half-bridge modules.

17. The AC/DC converter (1900) of claim 13, wherein the input stage comprises a total of 6m diodes (D₁₁ to D₆ₘ), the plurality of half-bridge modules of the switching converter stage comprises two sets of 2n half-bridge modules, and m and n are positive integers , wherein a first set of the 2n half-bridge modules is cascaded between the positive and negative terminals with the neutral terminal (N) being electrically coupled to a midpoint between upper n half-bridge modules and lower n half-bridge modules of the first set of the 2n half-bridge modules, and wherein a second set of the 2n half-bridge modules is cascaded between the positive and negative terminals with one primary side terminal of the transformer (TR) being connected to a midpoint between upper n half-bridge modules and lower n half-bridge modules of the second set of the 2n half-bridge modules.

18. The AC/DC converter (2000, 2100, 2400) of claim 13, wherein the input stage comprises a total of 6m diodes (FIG. 20A-D₁ to D₆, FIG. 21-D₁₁ to D₆ₘ, FIG. 24-D₁₁ to D₆ₘ), the switching converter stage comprises a total of 4n half-bridge modules cascaded between the positive and negative terminals and a flying capacitor (C_{f}), and m and n are positive integers, wherein the neutral terminal (N) is electrically coupled to a midpoint between upper 2n half-bridge modules and lower 2n half-bridge modules of the 4n half-bridge modules, and wherein the flying capacitor (C_{f}) is connected between a first midpoint between upper n half-bridge modules and lower n half-bridge modules of said upper 2n half-bridge modules and a second midpoint between upper n half-bridge modules and lower n half-bridge modules of said lower 2n half-bridge modules.

19. The AC/DC converter (2200, 2300, 2400) of claim 13, wherein the output stage comprises a total of N transformers (TR1 to TR2, TR1 to TRN), primary sides of the N transformers are connected in parallel with each other, and wherein a secondary side of each of the N transformers is independently connected to a full active bridge, wherein N is a positive integer greater than or equal to 2.

20. An interleaved or paralleled AC/DC converter, **characterized by** comprising two of the AC/DC converters (1401, 1402) according to claim 1, wherein in a directly parallel operation, the gate signals for a first one of the AC/DC converters (1401) are the same as the gate signals for a second one of the AC/DC converters (1402), and wherein in an interleaved operation, the gate signals in the first one of the AC/DC converters (1401) are interleaved 180 degrees relative to the gate signals in the second one of the AC/DC converters (1402).
